# EUROPEAN PATENT SPECIFICATION

(11) **EP 2 630 595 B1**
(45) Date of publication and mention of the grant of the patent: **09.09.2020**
(21) Application number: 11835141.0
(22) Date of filing: 20.10.2011
(51) Int. Cl.: G06F 16/245, G06F 16/2457, G06F 16/332, G06F 16/951, G06F 16/903

(54) **SEARCHING MULTIPLE DATA SOURCES USING A MOBILE COMPUTING DEVICE**
DURCHSUCHUNG MEHRERER DATENQUELLEN MITHILFE EINER MOBILEN BERECHNUNGSVORRICHTUNG
RECHERCHE DANS DE MULTIPLES SOURCES DE DONNÉES À L'AIDE DE DISPOSITIF INFORMATIQUE MOBILE

(30) Priority: 21.10.2010 US 405604 P
(43) Date of publication of application: 28.08.2013
(73) Proprietor: QUALCOMM Incorporated, San Diego, CA 92121-1714 (US)
(72) Inventor: DELLINGER, Richard R., San Jose California 95126 (US); LYON, Jeremy G., Sunnyvale California 94085 (US); SHIPLACOFF, Daniel Marc G., Sunnyvale California 94085 (US); DUARTE, Matias G., Sunnyvale California 94085 (US)
(74) Representative: Potter, Julian Mark
(86) International application number: PCT/US2011/057074
(87) International publication number: WO 2012/054712

(56) References cited:
- EP-A1- 1 950 664
- EP-A2- 1 143 667
- WO-A1-2007/134894
- US-A- 6 100 890
- US-A1- 2002 087 620
- US-A1- 2006 239 215
- US-A1- 2007 027 857
- US-A1- 2007 067 272
- US-A1- 2010 161 594
- US-A1- 2010 169 756
- US-B1- 6 760 759
- US-B1- 7 130 841

## Description

### BACKGROUND

### 1. FIELD OF ART

The disclosure generally relates to the field of searching data sources using a mobile computing device.

### 2. DESCRIPTION OF ART

Improvements in networking technologies have allowed data to be more commonly distributed across multiple storage locations or sources. Similarly, advancements in network technologies have also made mobile computing devices with telephonic functionality, e.g., smartphones, are increasingly popular by allowing access to data using a mobile computing device. Increased processor capabilities have also allowed mobile computing devices to execute a variety of applications for manipulating data. However, because the locally-available storage space is limited by the compact size of many mobile computing devices, mobile computing device users frequently store data in multiple locations and retrieve the data from different locations using network requests. For example, a user of a mobile computing device may maintain accounts associated with multiple websites, may store data in a variety of locations and may use multiple applications to retrieve and modify data. This decentralization of data often requires a user to search multiple sources to find desired data, increasing the time needed to find data. For example, a user may need to individually access multiple websites to check multiple accounts for data or the user may need to individually access multiple applications to find desired data.

However, the compact size of mobile computing devices makes it inconvenient for many users to repeatedly enter inputs for individually accessing multiple data sources and searching for data within an accessed data source. Thus, use of conventional mobile computing devices may increase the time needed for a user to search multiple sources for data.

US 2007/067272 relates to system and method for providing a user interface for mobile devices. The user interface can include a search function that utilizes user input to search multiple software applications and data sources.

The object of the invention is solved by the features of the independent claims. Further embodiments are the subject-matter of the dependent claims.

### BRIEF DESCRIPTION OF DRAWINGS

The disclosed embodiments have other advantages and features which will be more readily apparent from the detailed description, the appended claims, and the accompanying figures (or drawings). A brief introduction of the figures is below.
Figure (FIG.) 1a illustrates one example embodiment of a mobile computing device in a first positional state.
Figure 1b illustrates one example embodiment of the mobile computing device in a second positional state.
Figure 2 illustrates one example embodiment of an architecture of a mobile computing device.
Figure 3 illustrates one example of a method for dynamically modifying a search database which identifies one or more search locations.
Figure 4 illustrates one example embodiment of a method for searching multiple data sources and initiating an action using the search text.
Figure 5 illustrates one example of a method for generating alternate search text using stored search locations.
Figure 6 illustrates one example of a user interface configured to apply entered search text against one or more applications.

### DETAILED DESCRIPTION

The Figures (FIGS.) and the following description relate to preferred embodiments by way of illustration only. It should be noted that from the following discussion, alternative embodiments of the structures and methods disclosed herein will be readily recognized as viable alternatives that may be employed without departing from the principles of what is claimed.

Reference will be made in detail to several embodiments, examples of which are illustrated in the accompanying figures. It is noted that wherever practicable similar or like reference numbers may be used in the figures and may indicate similar or like functionality. The figures depict embodiments of the disclosed system (or method) for purposes of illustration only. One skilled in the art will readily recognize from the following description that alternative embodiments of the structures and methods illustrated herein may be employed without departing from the principles described herein.

### OVERVIEW OF EXAMPLE CONFIGURATIONS

One example of a device, system, method (or process), or computer readable storage medium that includes a search manager which provides a single interface for searching multiple data sources or initiating an action from received search text. The search manager may maintain a search database storing data that identifies different search locations, such as different websites or applications, and a search application associated with various search locations. In one example the search manager dynamically modifies the search database by adding new search locations or modifying stored data associated with search locations when data is received by the mobile computing device. For example, responsive to identifying search-specific data in data from a website, such as a tag, the search manager adds an identifier and a search application associated with the website to the search database. In various examples the search manager may use one or more parameters, such as frequency of website access, recency of website access or a combination of frequency and recency of website access, to determine whether to add a website, or other search location, to the search database or to modify data stored in the search database associated with an accessed search location.

In one example the search manager determines alternate search terms associated with received search text using search applications stored in the search database, simplifying modification of search terms to increase the likelihood of data retrieval. For example, the search manager communicates received search text to one or more search applications, such as external search engines, which identify alternate search terms similar to the search text. For example, the alternate search terms include one or more words or phrases included in the search text or include words or phrases synonymous with words or phrases in the search text. The search manager receives and displays the alternate search terms using the mobile computing device, allowing a user to review and select an alternate search term if desired. In one embodiment, the search manager also displays data indicating the origin of an alternate search term, such as an image or text associated with a search application from which the alternate search term was received.

Additionally, the search manager allows one or more applications to execute actions using received search text. In one embodiment, the search manager searches storage locations local to the mobile computing device, such as a contact database, a bookmark store, stored lists, a calendar, for received search text and searches predefined applications if no match to the search text is found in local storage locations. One or more of the predefined applications are displayed using a screen of the mobile computing device, allowing a user to select an application. The search manager communicates the search text to the selected application, which executes an action using the search text. For example, if an e-mail application is selected, an e-mail or message is generated including the search text in a message body or subject text. In one embodiment, the format of the search text affects the executed action, allowing an application to execute different actions in view of the format of the search text.

### EXAMPLE MOBILE COMPUTING DEVICE

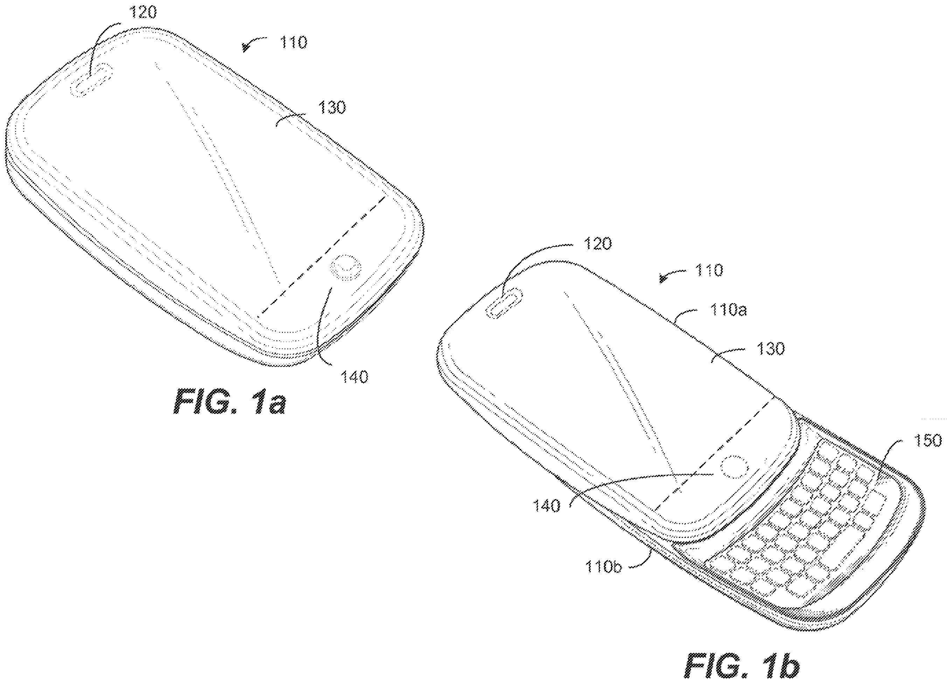

In one example embodiment, the configuration as disclosed may be configured for use between a mobile computing device, that may be host device, and an accessory device. Figures 1a and 1b illustrate one embodiment of a mobile computing device 110. Figure (FIG.) la illustrates one embodiment of a first positional state of the mobile computing device 110 having telephonic functionality, e.g., a mobile phone or smartphone. Figure 1b illustrates one embodiment of a second positional state of the mobile computing device 110 having telephonic functionality, e.g., a mobile phone, smartphone, netbook, or laptop computer. The mobile computing device 110 is configured to host and execute a phone application for placing and receiving telephone calls.

It is noted that for ease of understanding the principles disclosed herein are in an example context of a mobile computing device 110 with telephonic functionality operating in a mobile telecommunications network. However, the principles disclosed herein may be applied in other duplex (or multiplex) telephonic contexts such as devices with telephonic functionality configured to directly interface with public switched telephone networks (PSTN) and/or data networks having voice over internet protocol (VoIP) functionality. Likewise, the mobile computing device 110 is only by way of example, and the principles of its functionality apply to other computing devices, e.g., tablet computers, laptop computers, notebook computers, netbook computers, desktop computers, server computers and the like.

The mobile computing device 110 includes a first portion 110a and a second portion 110b. The first portion 110a comprises a screen for display of information (or data) and may include navigational mechanisms. These aspects of the first portion 110a are further described below. The second portion 110b comprises a keyboard and also is further described below. The first positional state of the mobile computing device 110 may be referred to as an "open" position, in which the first portion 110a of the mobile computing device slides in a first direction exposing the second portion 110b of the mobile computing device 110 (or vice versa in terms of movement). The mobile computing device 110 remains operational in either the first positional state or the second positional state.

The mobile computing device 110 is configured to be of a form factor that is convenient to hold in a user's hand, for example, a personal digital assistant (PDA) or a smartphone form factor. For example, the mobile computing device 110 can have dimensions ranging from 7.5 to 15.5 centimeters in length, 5 to 15 centimeters in width, 0.5 to 2.5 centimeters in thickness and weigh between 50 and 250 grams.

The mobile computing device 110 includes a speaker 120, a screen 130, and an optional navigation area 140 as shown in the first positional state. The mobile computing device 110 also includes a keypad 150, which is exposed in the second positional state. The mobile computing device also includes a microphone (not shown). The mobile computing device 110 also may include one or more switches (not shown). The one or more switches may be buttons, sliders, or rocker switches and can be mechanical or solid state (e.g., touch sensitive solid state switch).

The screen 130 of the mobile computing device 110 is, for example, a 240 x 240, a 320 x 320, a 320 x 480, or a 640 x 480 touch sensitive (including gestures) display screen. The screen 130 can be structured from, for example, such as glass, plastic, thin-film or composite material. The touch sensitive screen may be a transflective liquid crystal display (LCD) screen. In alternative embodiments, the aspect ratios and resolution may be different without departing from the principles of the inventive features disclosed within the description. By way of example, embodiments of the screen 130 comprises an active matrix liquid crystal display (AMLCD), a thin-film transistor liquid crystal display (TFT-LCD), an organic light emitting diode (OLED), an interferometric modulator display (IMOD), a liquid crystal display (LCD), or other suitable display device. In an embodiment, the display displays color images. In another embodiment, the screen 130 further comprises a touch-sensitive display (e.g., pressure-sensitive (resistive), electrically sensitive (capacitive), acoustically sensitive (SAW or surface acoustic wave), photo-sensitive (infra-red)) including a digitizer for receiving input data, commands or information from a user. The user may use a stylus, a finger or another suitable input device for data entry, such as selecting from a menu or entering text data.

The optional navigation area 140 is configured to control functions of an application executing in the mobile computing device 110 and visible through the screen 130. For example, the navigation area includes an x-way (x is a numerical integer, e.g., 5) navigation ring that provides cursor control, selection, and similar functionality. In addition, the navigation area may include selection buttons to select functions displayed through a user interface on the screen 130. In addition, the navigation area also may include dedicated function buttons for functions such as, for example, a calendar, a web browser, an e-mail client or a home screen. In this example, the navigation ring may be implemented through mechanical, solid state switches, dials, or a combination thereof. In an alternate embodiment, the navigation area 140 may be configured as a dedicated gesture area, which allows for gesture interaction and control of functions and operations shown through a user interface displayed on the screen 130.

The keypad area 150 may be a numeric keypad (e.g., a dialpad) or a numeric keypad integrated with an alpha or alphanumeric keypad or character keypad 150 (e.g., a keyboard with consecutive keys of Q-W-E-R-T-Y, A-Z-E-R-T-Y, or other equivalent set of keys on a keyboard such as a DVORAK keyboard or a double-byte character keyboard).

Although not illustrated, it is noted that the mobile computing device 110 also may include an expansion slot. The expansion slot is configured to receive and support expansion cards (or media cards). Examples of memory or media card form factors include COMPACTFLASH, SD CARD, XD CARD, MEMORY STICK, MULTIMEDIA CARD, SDIO, and the like.

### EXAMPLE MOBILE COMPUTING DEVICE ARCHITECTURAL OVERVIEW

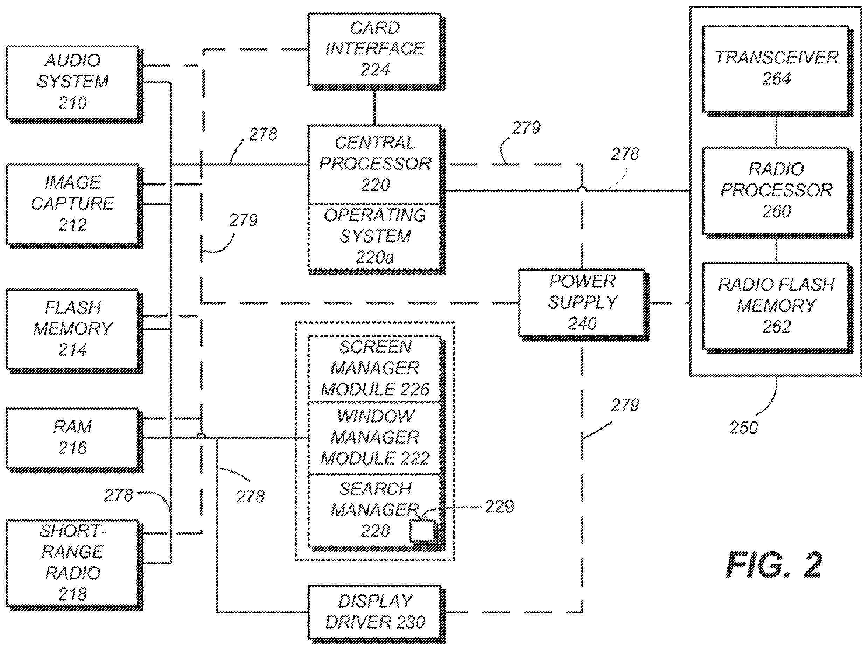

Referring next to Figure 2, a block diagram illustrates one embodiment of an architecture of a mobile computing device 110, with telephonic functionality. By way of example, the architecture illustrated in Figure 2 will be described with respect to the mobile computing device of Figures 1a and 1b. The mobile computing device 110 includes one or more processors (e.g., central processor 220), a power supply 240, and a radio subsystem 250. Examples of a central processor 220 include processing chips and system based on architectures such as ARM (including cores made by microprocessor manufacturers), ARM XSCALE, AMD ATHLON, SEMPRON or PHENOM, INTEL ATOM, XSCALE, CELERON, CORE, PENTIUM or ITANIUM, IBM CELL, POWER ARCHITECTURE, SUN SPARC and the like.

The central processor 220 is configured for operation with a computer operating system. The operating system is an interface between hardware and an application, with which a user typically interfaces. The operating system is responsible for the management and coordination of activities and the sharing of resources of the mobile computing device 110. The operating system provides a host environment for applications that are run on the mobile computing device 110. As a host, one of the purposes of an operating system is to handle the details of the operation of the mobile computing device 110. Examples of an operating system include PALM OS and WEBOS, MICROSOFT WINDOWS (including WINDOWS 7, WINDOWS CE, and WINDOWS MOBILE), SYMBIAN OS, RIM BLACKBERRY OS, APPLE OS (including MAC OS and IPHONE OS), GOOGLE ANDROID, and LINUX.

The central processor 220 communicates with an audio system 210, an image capture subsystem (e.g., camera, video or scanner) 212, flash memory 214, RAM memory 216, and a short range radio module 218 (e.g., Bluetooth, Wireless Fidelity (WiFi) component (e.g., IEEE 802.11)). The central processor communicatively couples these various components or modules through a data line (or bus) 278. The power supply 240 powers the central processor 220, the radio subsystem 250 and a display driver 230 (which may be contact- or inductive-sensitive). The power supply 240 may correspond to a direct current source (e.g., a battery pack, including rechargeable) or an alternating current (AC) source. The power supply 240 powers the various components through a power line (or bus) 279.

The central processor communicates with applications executing within the mobile computing device 110 through the operating system 220a. In addition, intermediary components, for example, a window manager module 222 and a screen manager module 226, provide additional communication channels between the central processor 220 and operating system 220 and system components, for example, the display driver 230.

In one embodiment, the window manager module 222 comprises software (e.g., integrated with the operating system) or firmware (lower level code that resides is a specific memory for that code and for interfacing with specific hardware, e.g., the processor 220). The window manager module 222 is configured to initialize a virtual display space, which may be stored in the RAM 216 and/or the flash memory 214. The virtual display space includes one or more applications currently being executed by a user and the current status of the executed applications. The window manager module 222 receives requests, from user input or from software or firmware processes, to show a window and determines the initial position of the requested window. Additionally, the window manager module 222 receives commands or instructions to modify a window, such as resizing the window, moving the window or any other command altering the appearance or position of the window, and modifies the window accordingly.

The screen manager module 226 comprises software (e.g., integrated with the operating system) or firmware. The screen manager module 226 is configured to manage content that will be displayed on the screen 130. In one embodiment, the screen manager module 226 monitors and controls the physical location of data displayed on the screen 130 and which data is displayed on the screen 130. The screen manager module 226 alters or updates the location of data as viewed on the screen 130. The alteration or update is responsive to input from the central processor 220 and display driver 230, which modifies appearances displayed on the screen 130. In one embodiment, the screen manager 226 also is configured to monitor and control screen brightness. In addition, the screen manager 226 is configured to transmit control signals to the central processor 220 to modify power usage of the screen 130.

A search manager 228 comprises software (e.g., integrated with the operating system or configured to be an application operational with the operating system) or firmware (e.g., stored in the flash memory 214 or RAM 216) including instructions, that when executed configure the central processor 220 to receive search terms, such as text strings received from user interactions with keys in the keypad area 150 or from a touch sensitive display, and communicate the received search terms to one or more search locations to determine whether a search location includes data matching, or similar to, the received search terms. In various embodiments, the search locations may comprise websites external to the mobile computing device 110, such as search engines, or applications locally stored in the memory 216 or flash memory 214 of the mobile computing device 110.

In one example the search manager 228 receives an input identifying a search location, such as a search engine or an application, then receives one or more search terms and searches the identified search location for data matching, or similar to, the search terms. Alternatively, the search manager 228 receives search text and searches a subsequently identified search location based on the received search text. Hence, the search manager 228 exchanges data with the RAM 216, flash memory 214 and the transceiver 264 to allow the search manger 228 to access data locally-stored by the mobile computing device 110 as well as data maintained by a remote source accessible by a network.

The search manager 228 includes a search database 229 which stores data identifying one or more search locations. For example, the search database 229 includes one or more identifiers each associated with a search location and a search plug-in or other search application associated with each identifier. This allows the search database 229 to maintain a record of search locations to access and a search application for use in searching the content of a search location. In addition to receiving search text, the search manager 228 also receives a selection of an identifier from the search database 229, causing use of a search application associated with the identifier to determine whether a search location associated with the selected identifier includes data similar to, or matching, the search text. The identifiers may identify a website, a local data storage device, a local data storage location, an application or any other location including data. For example, the identifier may be a website identifier and the search database 229 associates a plug-in with the website identifier to search a website for the search text.

The search database 229 may also include one or more application identifiers, such as execution commands, to communicate received search terms to one or more applications, such as a contact manager, a calendar, a mapping program, a bookmark store or additional applications. In one example the search manager 228 and the search database 229 also allow searching of data within applications, allowing the search manager 228 to provide a single interface for searching multiple types of locations for data matching, or similar to, received search text.

It is noted that in one embodiment, central processor 220 executes logic (e.g., by way of programming, code, or instructions) corresponding to executing applications interfaced through, for example, the navigation area 140 or switches 170. It is noted that numerous other components and variations are possible to the hardware architecture of the computing device 200, thus an embodiment such as shown by Figure 2 is just illustrative of one implementation for an embodiment.

The radio subsystem 250 includes a radio processor 260, a radio memory 262, and a transceiver 264. The transceiver 264 may be two separate components for transmitting and receiving signals or a single component for both transmitting and receiving signals. In either instance, it is referenced as a transceiver 264. The receiver portion of the transceiver 264 communicatively couples with a radio signal input of the device 110, e.g., an antenna, where communication signals are received from an established call (e.g., a connected or on-going call). The received communication signals include voice (or other sound signals) received from the call and processed by the radio processor 260 for output through the speaker 120 (or 184). The transmitter portion of the transceiver 264 communicatively couples a radio signal output of the device 110, e.g., the antenna, where communication signals are transmitted to an established (e.g., a connected (or coupled) or active) call. The communication signals for transmission include voice, e.g., received through the microphone 160 of the device 110, (or other sound signals) that is processed by the radio processor 260 for transmission through the transmitter of the transceiver 264 to the established call.

In one embodiment, communications using the described radio communications may be over a voice or data network. Examples of voice networks include Global System of Mobile (GSM) communication system, a Code Division, Multiple Access (CDMA system), and a Universal Mobile Telecommunications System (UMTS). Examples of data networks include General Packet Radio Service (GPRS), third-generation (3G) mobile (or greater), Long Term Evolution (LTE), High Speed Download Packet Access (HSDPA), High Speed Uplink Packet Access (HSUPA), and Worldwide Interoperability for Microwave Access (WiMAX).

While other components may be provided with the radio subsystem 250, the basic components shown provide the ability for the mobile computing device to perform radiofrequency communications, including telephonic communications. In an embodiment, many, if not all, of the components under the control of the central processor 220 are not required by the radio subsystem 250 when a telephone call is established, e.g., connected or ongoing. The radio processor 260 may communicate with central processor 220 using the data line (or bus) 278.

The card interface 224 is adapted to communicate, wirelessly or wired, with external accessories (or peripherals), for example, media cards inserted into the expansion slot (not shown). The card interface 224 transmits data and/or instructions between the central processor and an accessory, e.g., an expansion card or media card, coupled within the expansion slot. The card interface 224 also transmits control signals from the central processor 220 to the expansion slot to configure the accessory. It is noted that the card interface 224 is described with respect to an expansion card or media card; it also may be structurally configured to couple with other types of external devices for the device 110, for example, an inductive charging station for the power supply 240 or a printing device.

### AUTOMATED MODIFICATION OF SEARCH DATABASE

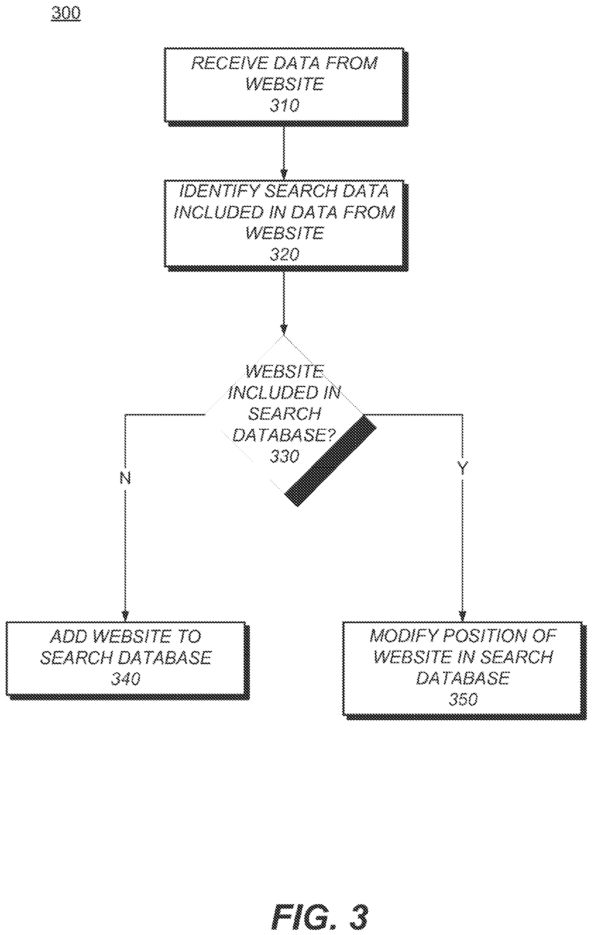

Figure 3 illustrates one example of a method 300 for dynamically modifying a search database 229 stored by a mobile computing device 110 and identifying one or more search locations. In an example the steps depicted in the method 300 are implemented by instructions for performing the described actions embodied or stored within a computer readable medium, e.g., flash memory 214 or RAM 216, that are executable by a processor, such as central processor 220. Those of skill in the art will recognize that the method 300 may be implemented in examples of hardware and/or software or combinations thereof. Moreover, other examples can include different and/or additional steps than the ones shown in Figure 3.

Initially, the mobile computing device 110 receives 310 data from a website via the transceiver 264. Data received 310 from the website is communicated to the central processor 220 which executes instructions stored in the search manager 228 to identify 320 search data. Examples of search data include data identifying a search plug-in associated with the website, included in the received data. For example, a tag within a structured document, such as an extensible markup language (XML) document, received from a website identifies a search plug-in associated with the website, such as a plug-in configured to searching content included in the website. In other embodiments, different types of data may be identified 320 to determine search functionality associated with the accessed website.

Responsive to identifying 320 search data, the processor 220 executes additional instructions from the search manager 228 to determine 330 whether the search database 229 includes data associated with the website. For example, an identifier such as a domain name or a universal resource indicator (URI) associated with the website from which data is retrieved is compared to identifiers previously stored in the search database 229. Responsive to determining 330 that the search database 229 does not include an identifier, or other data, associated with the website, an identifier associated with the website is added 340 to the search database 229. For example, a domain name, URI or Internet Protocol (IP) address associated with the website is stored. In one embodiment, a search application, such as a plug-in, associated with the website is added 340 to the search database 229 and associated with the identifier. Hence, the search manager 228 allows dynamic modification of the search database 229 to identify various websites from which data is received 310 and a search application for analyzing the content in the various websites. Because the search database 229 stores an identifier and a search application associated with a website, dynamically modifying the content of the search database 229 simplifies subsequent searching of a website by allowing the search manager 228 to directly communicate received search terms to a search application associated with a website, allowing content of the website to be searched without initially accessing the website.

In one example the search manager 228 may include instructions for adding 340 an accessed website and associated search application to the search database 229 based on one or more criteria. For example, the search manager 228 may determine, and accordingly track, the number of times the mobile computing device 110 receives 310 data from a website and adds 340 data associated with the website to the search database 229 after data has been received 310 from the website a predetermined (or threshold) number of times. This modifies the search database 229 based on the frequency with which data is received 310 a website.

Responsive to determining 330 that the search database 229 includes data identifying the accessed website, the search manager 228 modifies 350 the search database 229. For example, the search database 229 stores data associated with websites in an ordered, or structured, list. In one embodiment, the search manager 228 maintains data describing the number of times different websites have been accessed, allowing data in the search database 229 to be ordered based on the frequency with which various websites are accessed. For example, data in the search database 229 is ordered so that data associated with websites from which data is most frequently received 310 has a higher position within the list in the search database 229. In one embodiment, data in the search database 229 is modified 350 so that the position of data associated with a website is repositioned in the search database 229 as the website is more frequently accessed to simplify subsequent searching of the website using the search database 229.

In another example the search manager 228 maintains data identifying the date when data was most recently received 310 from various websites and modifies 350 the search database 229 so that the position of data associated with a website depends on the date when data was most recently received 310 from a website. For example, websites from which data is most recently received 310 is repositioned to simplify subsequent access to more recently accessed websites. Alternatively, the search manager 228 maintains data describing both the frequency and date of receipt 310 of data from websites and modifies 350 data in the search database 229 based on both the frequency and recency of access to websites in the search database 229. Additionally, the search database 229 may include a subset of data that is not modified 350, allowing the subset to remain in a consistent position within the search database 229 while the position of other data is modified 350.

By adding 340 data to the search database 229 or modifying 250 data included in the search database 229, the search manager 228 simplifies searching of various websites from a single interface by providing easier access to information for searching recently or frequently accessed websites. This enables a user to search previously accessed websites without requiring the user to again directly access the website.

It is noted that in alternate examples the data can be tracked, stored, and presented in an unstructured form. For example, the tracked and stored data can be weighted and the weighted results can correspond to character or image size associated with the item. The weighted results can then be displayed in a user interface in which items are displayed based on their weighted factor, for example, highly weighted items may be provided for display in large font text and lower weighted items may be provided for display is scaled smaller font text. As access to items or user preferences change, the weighted factors may subsequently change so that what is provided for display also subsequently changes.

### INITIATING AN ACTION FROM SEARCH TEXT

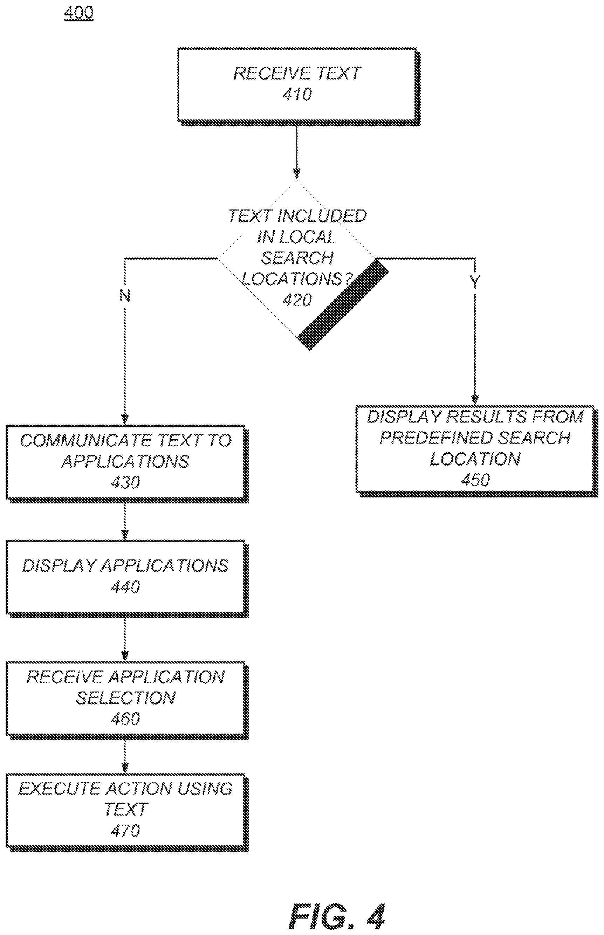

Figure 4 illustrates one embodiment of a method 400 for initiating an action using search text received by the search manager 228. In an embodiment, the steps depicted in the method 400 are implemented by instructions for performing the described actions embodied or stored within a computer readable medium, e.g., flash memory 214 or RAM 216, that are executable by a processor, such as the processor 220. Those of skill in the art will recognize that the method 400 may be implemented in embodiments of hardware and/or software or combinations thereof. Moreover, other embodiments can include different and/or additional steps than the ones shown in Figure 4.

The search manager 228 initially receives 410 search text from user interaction with one or more keys in the keypad area 150 or from user interaction with a touch sensitive display. In one embodiment, the search manager 228 may also reformat the search text 410 into a formatted string or into another format suitable for subsequent processing. The search manager 228 then determines 420 whether the search text or similar search text is included in one or more previously identified search locations internal to the mobile computing device 110 ("internal search locations"). In one embodiment, the search manager 228 searches the internal search locations while search text is being received 410, refining the search results as more of the search text is received 410. For example, as the search manager 410 receives characters included in the search text, the search manager 228 appends the received characters to a search string and determines 420 whether a contact manager, a calendar, a list manager, a bookmark manager or another application (or program) stored in the mobile computing device 110 or service communicatively coupled with the mobile computing device 110 includes data matching, or similar to, the search text. In one example, when the search manager 228 receives the character "B" as search text, the search manager 228 determines 420 whether a contact manager, a calendar or a bookmark manager has stored data including the character "B." The search manager 228 then receives 410 the character "o," resulting in the search text of "Bo," and the search manager 228 determines 420 whether the contact manager, the calendar or the bookmark manager has stored data including the text "Bo." This allows the search manager 228 to provide real-time search results that are dynamically modified as the search text is modified.

Responsive to determining 420 that an internal search location includes data similar to, or matching, the received text, the search manager 228 uses the screen 130 of the mobile computing device 110 to display 450 the matching, or similar, data from one or more internal search locations. In one embodiment, the search manager 228 also identifies the search location from which displayed 450 data was retrieved. For example, an icon, an image or text associated with an internal search location is displayed 450 proximate to data from the search location.

If the search manager 228 determines 440 that internal search locations do not include data matching, or similar to, the received search text, the search manager 228 communicates 430 the received search text to one or more applications. In one embodiment, the search manager 228 communicates 430 the received search text to one or more applications responsive to receiving an input from a user indicating that search results from the internal search locations are not of interest to the user or otherwise requesting communication 430 of the search text to one or more applications. The search manager 228 then displays 435 application identifiers each associated with an application. For example, icons, images or text associated with various applications are displayed 440. As additional search data is received, the search manager 228 may further refine the displayed 435 application identifiers, allowing dynamic modification of the display. For example, as the search manager 228 receives additional text augmenting previously received search text, the search manager 228 uses the additional text to modify the displayed 440 applications. A selection of an application from the application identifiers is then received 460 by the search manager 228. For example, the search manager 228 receives 460 a user input from a touch screen or from a keypad area 150 selecting an application identifier.

The selected application then executes 470 an action using the search text communicated 430 from the search manager 228. In one embodiment, the search manager 228 or the selected application determines the format of the received search text and the selected application executes 470 an action dependent on the format of the received search text. For example, if an e-mail application is selected, the search manager 228 or the e-mail application determines whether the received search text has one or more attributes associated with an e-mail address, such as inclusion of one or more characters associated with an e-mail address. If the received search text has an attribute associated with an e-mail address, the e-mail application executes 470 an action generating an e-mail with the received search text included as a destination address. If the received search text does not have an attribute associated with an e-mail address, the e-mail application executes 470 an action generating an e-mail having the received text included in a subject field or in a message body.

In an embodiment, the search manager 228 or the selected application may also use data associated with the received text to determine the executed 470 action. For example, the search manager 228 or the selected application identifies a location or category associated with the received text and executes 470 an action based on the location or category. For example, the selected application identifies an address associated with the received search text and provides driving directions to the address or determines a restaurant name associated with the received search text and provides an address associated with the restaurant name. As another example, the selected application identifies a movie name associated with received search text and retrieves show times or theater names associated with the movie title.

Thus, the search manager 228 allows a user to initiate actions by a variety of applications based on search text received by the search manager 228. Rather than require opening of various applications to provide data directly to an application, the search manager 228 receives search text and communicates the search text to an application selected by the user, which executes an action using the search text.

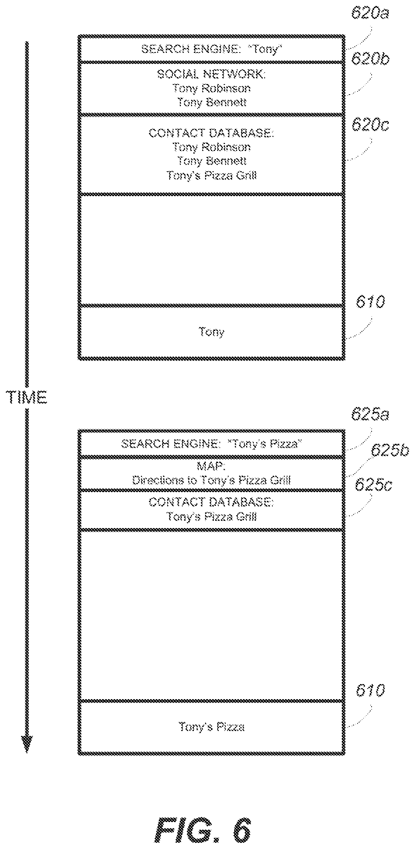

By way of example, Figure 6 illustrates one example embodiment of entered search text applied against one or more applications. Here, as search text 610 is entered, e.g. "Tony", a system applies the entered search text against a search engine, a social network application, and a contacts management application and provides preliminary results against each 620a, b, c at the top of the screen. As the user continues to type "Tony's Pizza", the word developed as entered continues to be applied against other applications so that new applications may be introduced, e.g., a map application, and others may be removed as not as pertinent, e.g., the social network application. Other applications may further modify the results displayed, e.g., the contact management application. The corresponding results may be displayed along the top of the screen, e.g., 625a, 625b, 625c.

The configuration as described provides users an ability to conduct a search for information across multiple applications, for example, applications within a mobile computing device, without having to individually enter the search query into each application individually. Moreover, the configuration allows for searching within local applications as well as remote resources, e.g., through the web or web services. By having just one entry for the search query with multiple destinations against which to apply the search query, both locally and/or remotely, a user is able to rapidly locate information corresponding to the search query.

### ALTERNATIVE SEARCH TEXT GENERATION

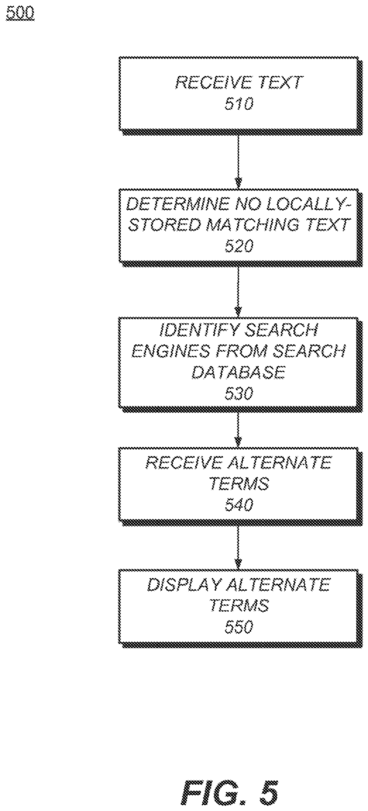

Figure 5 illustrates one example of a method 500 for generating alternate search text from stored data sources. In an example the steps depicted in the method 500 are implemented by instructions for performing the described actions embodied or stored within a computer readable medium, e.g., flash memory 214 or RAM 216, that are executable by a processor, such as central processor 220. Those of skill in the art will recognize that the method 400 may be implemented in examples of hardware and/or software or combinations thereof. Moreover, other examples can include different and/or additional steps than the ones shown in Figure 5.

Generating alternate search text from received search terms allows modification or refinement of search terms in view of the locations being searched to increase the likelihood of retrieving desired data. For example, if various search locations do not include data matching, or similar to, the received search terms, the search manager 228 may use one or more search engines or other search locations to identify alternative search terms, such as synonyms or alternate phrases, which have produced results in search engines to improve the likelihood of the desired data being identified.

Initially, the search manager 228 receives search text from a user as described above in conjunction with Figures 3 and 4 and determines 520 whether local search locations include data matching, or similar to, the received search text. If the search manager 228 determines 520 that the local search locations do not include data matching, or similar to, the received search text, the search manager 228 identifies 530 one or more external search applications, such as websites associated with search engines, from the search database 229. In one example the search manager 228 displays the identified search applications on a screen 130 of the mobile computing device 110, allowing a user to select one or more identified search applications from the displayed options. Alternatively, the search manager 228 uses predetermined criteria, such as the most frequently accessed search applications or the most recently accessed search applications, to identify 530 one or more search applications from the search database 229.

The search manager 228 communicates the received search text to the identified search applications which determine alternate text strings using the received search text. For example, the one or more identified search applications identify alternative search text from search queries previously received by the search applications that include words or phrases similar to those in the received search text, from data stored by the search application associating search terms with alternate terms other methods of identifying alternate search text. The alternate text strings are received 540 by the search manager 228 and displayed 550 on the screen 130 of the mobile communication device 110, allowing a user to review and select one or more alternate text strings for subsequent use in searching internal search locations, or for searching other search locations. In one example the search manager 228 also displays 550 an identifier proximate to an alternate search term that identifies one or more search applications which determined the alternate search string. For example, an icon, an image, a graphic or text associated with a search application is displayed 550 proximate to an alternate search term received 540 from the search application. In one example multiple identifiers are displayed proximate to an alternate search term if the alternate search term was received 540 from multiple search applications.

### ADDITIONAL CONSIDERATIONS

Some portions of above description describe the embodiments in terms of algorithms and symbolic representations of operations on information, for example, as illustrated and described with respect to FIGS. 3-5. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Some embodiments may be described using the expression "coupled" and "connected" along with their derivatives. For example, some embodiments may be described using the term "connected" to indicate that two or more elements are in direct physical or electrical contact with each other. In another example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of the invention. This description should be read to include one or at least one and the singular also includes the plural unless it is obvious that it is meant otherwise.

Upon reading this disclosure, those of skill in the art will appreciate still additional alternative structural and functional designs for a system and a process for a search manager on a mobile computing device simplifying searching of multiple sources for data, for using received search terms for initiating an application action or for determining alternate search terms through the disclosed principles herein. Thus, while particular embodiments and applications have been illustrated and described, it is to be understood that the disclosed embodiments are not limited to the precise construction and components disclosed herein. Various modifications, changes and variations, which will be apparent to those skilled in the art, may be made in the arrangement, operation and details of the method and apparatus disclosed herein without departing from the scope defined in the appended claims.

## Claims

1. A computer- implemented method for initiating an action on a mobile computing device responsive to receiving text data, (400) the method comprising:
receiving text data; (410)
determining whether one or more storage locations within the mobile computing device include data similar to the received text data; (420)
responsive to determining the one or more storage locations within the mobile computing device not including data similar to the received text data, communicating the received text data to one or more applications; (430)
displaying, on a screen of the mobile computing device, one or more application identifiers each associated with an application from the one or more applications; (440) receiving a selection identifying an application identifier; (460) and
executing, using at least one processor, an action using a selected application associated with the selected application identifier, the action using the received search text data, (470) wherein executing, using the at least one processor, the said action comprises:
determining a format associated with the received text data;
determining the action based on the format associated with the received text data and wherein determining whether one or more storage locations within the mobile computing device include data similar to the received text data comprises:
responsive to determining a storage location within the mobile computing device includes data similar to the received text data, displaying, on the screen, data from the storage location within the mobile computing device and wherein receiving text data comprises:
modifying, using the processor, a format associated with the received text data.

2. The method of claim 1, wherein executing, using the processor included in the mobile computing device, the action using the selected application comprises:
identifying data associated with the received text data; and
determining the action based on the data associated with the received text data, optionally wherein the data associated with the received text data comprises a location or a category.

3. A computer readable storage medium configured to store instructions to receive search text data and initiate an action responsive to the search text data, (400) the instructions when executed by a processor cause the processor to:
determine whether one or more storage locations identified by data stored in a memory include data similar to the search text data; (420) responsive to determining the one or more storage locations do not include data similar to the received text data, communicate the received search text data to one or more applications;
provide for display one or more application identifiers each associated with an application from the one or more applications; (440) receive a selection of an application identifier; (460) and execute an action using a selected application associated with the selected application identifier, the action using the received search text data, (470) wherein when executed, using the at least one processor, the said action causes the processor to:
determine a format associated with the received text data;
determine the action based on the format associated with the received text data and wherein determine whether one or more storage locations within the mobile computing device include data similar to the received text data comprises:
responsive to determining a storage location within the mobile computing device includes data similar to the received text data, display, on the screen, data from the storage location within the mobile computing device and wherein receiving text data causes the processor to:
modify a format associated with the received text data.

## Patentansprüche

1. Computerimplementiertes Verfahren zum Einleiten einer Aktion auf einem mobilen Computergerät als Reaktion auf den Empfang von Textdaten (400), wobei das Verfahren Folgendes beinhaltet:
Empfangen von Textdaten (410);
Feststellen, ob ein oder mehrere Speicherorte in dem mobilen Computergerät Daten ähnlich den empfangenen Textdaten enthalten (420);
Übermitteln, als Reaktion auf die Feststellung, dass die ein oder mehreren Speicherorte in dem mobilen Computergerät keine Daten ähnlich den empfangenen Textdaten enthalten, der empfangenen Textdaten an eine oder mehrere Anwendungen (430);
Anzeigen, auf einem Bildschirm des mobilen Computergeräts, von einer oder mehreren Anwendungskennungen, die jeweils mit einer Anwendung der ein oder mehreren Anwendungen assoziiert sind (440);
Empfangen einer Auswahl, die eine Anwendungskennung identifiziert (460); und
Ausführen, mit wenigstens einem Prozessor, einer Aktion mittels einer mit der gewählten Anwendungskennung assoziierten gewählten Anwendung, wobei die Aktion die empfangenen Suchtextdaten benutzt (470),
wobei das Ausführen, mit dem wenigstens einen Prozessor, der genannten Aktion Folgendes beinhaltet:
Bestimmen eines mit den empfangenen Textdaten assoziierten Formats;
Bestimmen der Aktion auf der Basis des mit den empfangenen Textdaten assoziierten Formats, und wobei
das Feststellen, ob ein oder mehrere Speicherorte in dem mobilen Computergerät Daten ähnlich den empfangenen Textdaten beinhalten, Folgendes beinhaltet:
Anzeigen auf dem Bildschirm, als Reaktion auf die Feststellung, dass ein Speicherort in dem mobilen Computergerät Daten ähnlich den empfangenen Textdaten beinhaltet, von Daten von dem Speicherort in dem mobilen Computergerät, und wobei das Empfangen von Textdaten Folgendes beinhaltet:
Modifizieren, mit dem Prozessor, eines mit den empfangenen Textdaten assoziierten Formats.

2. Verfahren nach Anspruch 1, wobei das Ausführen, mit dem in dem mobilen Computergerät enthaltenen Prozessor, der Aktion mittels der gewählten Anwendung Folgendes beinhaltet:
Identifizieren von mit den empfangenen Textdaten assoziierten Daten; und
Bestimmen der Aktion auf der Basis der mit den empfangenen Textdaten assoziierten Daten, wobei optional die mit den empfangenen Textdaten assoziierten Daten einen Ort oder eine Kategorie umfassen.

3. Computerlesbares Speichermedium, konfiguriert zum Speichern von Befehlen zum Empfangen von Suchtextdaten und zum Einleiten einer Aktion als Reaktion auf die Suchtextdaten (400), wobei die Befehle bei Ausführung durch einen Prozessor bewirken, dass der Prozessor Folgendes ausführt:
Feststellen, ob ein oder mehrere Speicherorte, die durch in einem Speicher gespeicherte Daten identifiziert werden, Daten ähnlich den Suchtextdaten enthalten (420);
Übermitteln, als Reaktion auf die Feststellung, dass die ein oder mehreren Speicherorte keine Daten ähnlich den empfangenen Textdaten enthalten, der empfangenen Suchtextdaten an eine oder mehrere Anwendungen;
Bereitstellen, zur Anzeige, von einer oder mehreren Anwendungskennungen, die jeweils mit einer Anwendung der ein oder mehreren Anwendungen assoziiert sind (440);
Empfangen einer Auswahl einer Anwendungskennung (460); und
Ausführen einer Aktion mittels einer mit der gewählten Anwendungskennung assoziierten gewählten Anwendung, wobei die Aktion die empfangenen Suchtextdaten benutzt (470),
wobei bei Ausführung mit dem wenigstens einen Prozessor die genannte Aktion bewirkt, dass der Prozessor Folgendes ausführt:
Bestimmen eines mit den empfangenen Textdaten assoziierten Formats;
Bestimmen der Aktion auf der Basis des mit den empfangenen Textdaten assoziierten Formats, und
wobei das Feststellen, ob ein oder mehrere Speicherorte in dem mobilen Computergerät Daten ähnlich den empfangenen Textdaten beinhalten, Folgendes beinhaltet:
Anzeigen, auf dem Bildschirm, als Reaktion auf die Feststellung, dass ein Speicherort in dem mobilen Computergerät Daten ähnlich den empfangenen Textdaten beinhaltet, von Daten von dem Speicherort in dem mobilen Computergerät, und wobei das Empfangen von Textdaten bewirkt, dass der Prozessor Folgendes ausführt:
Modifizieren eines mit den empfangenen Textdaten assoziierten Formats.

## Revendications

1. Un procédé mis en œuvre par ordinateur destiné au lancement d'une action sur un dispositif informatique mobile en réponse à la réception de données textuelles (400), le procédé comprenant :
la réception de données textuelles (410),
la détermination si un ou plusieurs emplacements d'espace mémoire à l'intérieur du dispositif informatique mobile contiennent des données similaires aux données textuelles reçues (420),
en réponse à la détermination que les un ou plusieurs emplacements d'espace mémoire à l'intérieur du dispositif informatique mobile ne contiennent pas des données similaires aux données textuelles reçues, la communication des données textuelles reçues à une ou plusieurs applications (430),
l'affichage, sur un écran du dispositif informatique mobile, d'un ou de plusieurs identifiants d'application, chacun d'eux étant associé à une application provenant des une ou plusieurs applications (440),
la réception d'une sélection identifiant un identifiant d'application (460), et
l'exécution, au moyen d'au moins un processeur, d'une action au moyen d'une application sélectionnée associée à l'identifiant d'application sélectionné, l'action utilisant les données textuelles de recherche reçues (470),
où l'exécution, au moyen du au moins un processeur, de ladite action comprend :
la détermination d'un format associé aux données textuelles reçues,
la détermination de l'action en fonction du format associé aux données textuelles reçues, et
où la détermination si un ou plusieurs emplacements d'espace mémoire à l'intérieur du dispositif informatique mobile contiennent des données similaires aux données textuelles reçues comprend :
en réponse à la détermination qu'un emplacement d'espace mémoire à l'intérieur du dispositif informatique mobile contient des données similaires aux données textuelles reçues, l'affichage, sur l'écran, de données à partir de l'emplacement d'espace mémoire à l'intérieur du dispositif informatique mobile, et où la réception de données textuelles comprend :
la modification, au moyen du processeur, d'un format associé aux données textuelles reçues.

2. Le procédé selon la Revendication 1, où l'exécution, au moyen du processeur inclus dans le dispositif informatique mobile, de l'action au moyen de l'application sélectionnée comprend :
l'identification de données associées aux données textuelles reçues, et
la détermination de l'action en fonction des données associées aux données textuelles reçues, éventuellement où les données associées aux données textuelles reçues comprennent un emplacement ou une catégorie.

3. Un support à mémoire lisible par ordinateur configuré de façon à conserver en mémoire des instructions destinées à la réception de données textuelles de recherche et au lancement d'une action en réponse aux données textuelles de recherche (400), les instructions, lorsqu'elles sont exécutées par un processeur, amènent le processeur à :
déterminer si un ou plusieurs emplacements d'espace mémoire identifiés par des données conservées en mémoire dans une mémoire contiennent des données similaires aux données textuelles de recherche (420),
en réponse à la détermination que les un ou plusieurs emplacements d'espace mémoire ne contiennent pas des données similaires aux données textuelles reçues,
communiquer les données textuelles de recherche reçues à une ou plusieurs applications,
fournir à des fins d'affichage un ou plusieurs identifiants d'application, chacun d'eux étant associé à une application à partir des un ou plusieurs applications (440),
recevoir une sélection d'un identifiant d'application (460), et
exécuter une action au moyen d'une application sélectionnée associée à l'identifiant d'application sélectionné, l'action utilisant les données textuelles de recherche reçues (470), et
où, lorsqu'elle est exécutée, au moyen du au moins un processeur, ladite action amène le processeur à :
déterminer un format associé aux données textuelles reçues,
déterminer l'action en fonction du format associé aux données textuelles reçues, et
où la détermination si un ou plusieurs emplacements d'espace mémoire à l'intérieur du dispositif informatique mobile contiennent des données similaires aux données textuelles reçues comprend :
en réponse à la détermination qu'un emplacement d'espace mémoire à l'intérieur du dispositif informatique mobile comprend des données similaires aux données textuelles reçues, afficher, sur l'écran, des données à partir de l'emplacement d'espace mémoire à l'intérieur du dispositif informatique mobile, et
où la réception de données textuelles amène le processeur à :
modifier un format associé aux données textuelles reçues.
